# EUROPEAN PATENT APPLICATION

(11) **EP 4 729 320 A1**
(43) Date of publication of application: **22.04.2026**
(21) Application number: 24906023.7
(22) Date of filing: 27.11.2024
(51) Int. Cl.: B60H 1/00, B62D 25/08

(54) **VEHICLE**

(30) Priority: 18.12.2023 CN 202311748000
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DUAN, Yanyan, Ningbo, Zhejiang 315899 (CN); DONG, Taotao, Ningbo, Zhejiang 315899 (CN); LIU, Yang, Ningbo, Zhejiang 315899 (CN); YAN, Wude, Ningbo, Zhejiang 315899 (CN); ZHOU, Jinbo, Ningbo, Zhejiang 315899 (CN); MAO, Yun, Ningbo, Zhejiang 315899 (CN); PAN, Fuli, Ningbo, Zhejiang 315899 (CN); ZHANG, Yao, Ningbo, Zhejiang 315899 (CN); YU, Tenglong, Ningbo, Zhejiang 315899 (CN); LIU, Qun, Ningbo, Zhejiang 315899 (CN); SUN, Weiliang, Ningbo, Zhejiang 315899 (CN)
(74) Representative: Michalski Hüttermann & Partner Patentanwälte mbB
(86) International application number: PCT/CN2024/135027
(87) International publication number: WO 2025/130538

(57) **Abstract**

Disclosed is a vehicle (100). The vehicle (100) includes a vehicle body (1), a connection structure (2), and a thermal management system (3). The vehicle body (1) includes a floor panel, a side panel (11), and a front compartment (12) enclosed by the floor panel and the side panel (11). The connection structure (2) is disposed in the front compartment (12) and connected to the vehicle body (1). The thermal management system (3) is disposed in the front compartment (12) and includes a first thermal management component (31) and a plurality of second thermal management components (32). The first thermal management component (31) is connected to the second thermal management components (32). The plurality of second thermal management components (32) are integrated into an integrated module (33) of the thermal management system (3). The integrated module (33) is connected to the connection structure (2). The first thermal management component (31) is connected to the vehicle body (1).

## Description

### CROSS-REFERENCE TO RELATED APPLICATIONS

The present disclosure claims priority to Chinese Patent Application No. 202311748000.5, entitled "VEHICLE" and filed on December 18, 2023, which is incorporated herein by reference in its entirety.

### TECHNICAL FIELD

The present disclosure relates to the field of vehicle technologies.

### BACKGROUND

With the development of new energy technologies, thermal management systems are required to provide more and more functions. Consequently, the size of thermal management system becomes increasingly large. In order to address this issue, a growing number of thermal management systems are tending towards integration.

### SUMMARY

The present disclosure provides a vehicle, including:
a vehicle body including a floor panel, a side panel, and a front compartment enclosed by the floor panel and the side panel;
a connection structure disposed in the front compartment and connected to the vehicle body; and
a thermal management system, disposed in the front compartment and including a first thermal management component and a plurality of second thermal management components, where the first thermal management component is connected to the second thermal management components, the plurality of second thermal management components are integrated into an integrated module of the thermal management system, the integrated module is connected to the connection structure, and the first thermal management component is connected to the vehicle body.

In some embodiments, the integrated module includes a plate body; the plate body includes an assembly surface and a connection surface opposite to each other along a thickness direction of the plate body; the second thermal management components are disposed on the connection surface; and the assembly surface is connected to the connection structure. The side panel includes a first side and a second side spaced apart from each other in a width direction of the vehicle, and the connection structure is connected to the first side.

In some embodiments, the first side includes a first plate surface, and the connection structure includes a first connection beam extending in a length direction of the vehicle; the first connection beam includes a first surface away from the first plate surface in the width direction of the vehicle; the assembly surface is connected to the first surface; and the length direction is different from the width direction.

In some embodiments, the first connection beam includes a second surface away from the floor panel; the plate body includes a first connection portion extending from the assembly surface away from the connection surface; and the first connection portion is connected to the second surface.

In some embodiments, a size of the first connection beam in the width direction of the vehicle is greater than or equal to 30 mm and less than or equal to 40 mm, and the width direction is different from the length direction; and/or
a distance between the first surface and the first plate surface is greater than or equal to 480 mm and less than or equal to 500 mm.

In some embodiments, the connection structure includes a second connection beam extending along the length direction of the vehicle; the second connection beam is disposed between the first connection beam and the floor panel; the second connection beam includes a third surface facing the first connection beam; the plate body includes a second connection portion extending from the assembly surface away from the connection surface; and the second connection portion is connected to the third surface.

In some embodiments, the first side includes a second plate surface, and the connection structure includes a fixing plate; the fixing plate is connected to the second plate surface; the fixing plate includes a connection unit extending parallel to the floor panel; the plate body includes a third connection portion extending from the connection surface away from the assembly surface; and the third connection portion is connected to the connection unit.

In some embodiments, the fixing plate includes a fixing unit connected to the connection unit; the fixing unit is connected to the second plate surface; and an extension direction of the fixing unit is different from an extension direction of the connection unit.

In some embodiments, the fixing plate includes a reinforcing rib, and the reinforcing rib is disposed on at least one of the fixing unit or the connection unit; and/or, the fixing plate includes a flange portion, and the flange portion is disposed at an edge of at least one of the fixing unit or the connection unit.

In some embodiments, the integrated module further includes a buffer member disposed between the plate body and the connection structure; and/or,
the second thermal management component includes at least one of a heat exchanger, a battery water pump, a motor water pump, an air conditioner water pump, or a three-way valve; and/or,
the first thermal management component includes at least one of a gas-liquid separator, a radiator, a cooling fan, a compressor, a water tank, a heater, or a condenser.

It can be learned from the foregoing embodiments that the thermal management system of the vehicle in the present disclosure integrates the second thermal management components into the integrated module, so that dispersed thermal management components can be centralized to some extent. By fixing the integrated module to the connection structure, the connection of the integrated module has a reduced requirement for the strength and fixing performance of the side panel. Moreover, in the present disclosure, a spacing can be formed between the integrated module and the side panel, which helps reduce a possibility of damage to the integrated module, reduce maintenance costs, and further avoid personal injury that may be caused by the integrated module when a pedestrian collides with a vehicle. In addition, the vehicle of the present disclosure can be assembled with a thermal management system with the integrated module, and can also be assembled with a thermal management system without the integrated module, that is, the vehicle can be selectively connected with one of two thermal management systems arranged in different manners, which helps improve the compatibility of the vehicle and save the development cycle and development cost of the vehicle.

It is to be understood that both the foregoing general description and the following detailed description are illustrative and explanatory only and are not restrictive of the present disclosure.

### BRIEF DESCRIPTION OF DRAWINGS

To describe the technical solutions in the embodiments of the present disclosure more clearly, the drawings required in the description of the embodiments will be briefly described below. The drawings in the following description are only some embodiments of the present disclosure. For those skilled in the art, other drawings can be obtained based on these drawings without any creative effort.
FIG. 1 is a partial schematic diagram of an embodiment of the present disclosure.
FIG. 2 shows a simplified schematic top view of an embodiment of the present disclosure.
FIG. 3 is a simplified schematic diagram of a connection structure and a thermal management system according to an embodiment of the present disclosure.
FIG. 4 is an overall schematic diagram of a fixing plate according to an embodiment of the present disclosure.

### Description of reference signs:

100 vehicle; 1 vehicle body; 11 side panel; 111 first side; 112 second side; 1111 first plate surface; 1112 second plate surface; 12 front compartment; 13 connection hole; 2 connection structure; 21 first connection beam; 211 first surface; 212 second surface; 22 second connection beam; 221 third surface; 23 fixing plate; 231 connection unit; 232 fixing unit; 233 reinforcing rib; 234 flange portion; 235 assembly hole; 236 water pipe hole; 3 thermal management system; 31 first thermal management component; 32 second thermal management component; 33 integrated module; 331 plate body; 332 connection surface; 333 assembly surface; 334 first connection portion; 335 second connection portion; 336 third connection portion; 4 bracket; D1 size; D2 distance; X length direction; Y width direction; Z height direction.

### DETAILED DESCRIPTION

Illustrative embodiments, examples of which are illustrated in the accompanying drawings, will be described in detail herein. When the following description refers to the drawings, like numerals in different drawings indicate the same or similar elements, unless otherwise indicated. The embodiments described in the following illustrative embodiments do not represent all embodiments consistent with the present disclosure. Rather, they are merely examples of devices consistent with some aspects of the present disclosure as detailed in the appended claims.

The term used in the present disclosure is for the purpose of describing particular embodiments only and is not intended to be limiting of the present disclosure. Technical terms or scientific terms used in the present disclosure should have general meanings as understood by one of ordinary skill in the art to which the present disclosure belongs, unless otherwise defined. Terms, such as "first", "second", or the like, used in the specification and claims of the present disclosure do not indicate any order, quantity, or importance, but are merely used to distinguish between different components. Similarly, terms, such as "one", "a/an", or the like, do not indicate a quantity limitation, but indicate that there is at least one, unless otherwise defined. The terms "a plurality of/multiple" and "several" refer to two or more. Unless otherwise indicated, terms, such as "front", "rear", "lower", "upper", and/or the like, are merely for ease of description, and are not limited to one position or one spatial orientation. Terms, such as "include", "comprise", or the like, mean that the elements or objects before "include" or "comprise" cover the elements or objects and equivalents thereof listed after "include" or "comprise", without excluding other elements or objects. Terms, such as "connect", "connect with each other", or the like, are not limited to physical or mechanical connections, and may include electrical connections, whether direct or indirect. As used in this specification and the appended claims, the singular forms, such as "a/an", "said" and "the", are also intended to include the plural forms, unless clearly indicated otherwise in the context. It should also be understood that the term "and/or" as used herein refers to and includes any or all possible combinations of one or more of the associated listed items.

An integrated thermal management system experiences an increase in volume. In terms of assembly, the integrated thermal management system has requirements for the strength of the connection structure. In terms of space, the integrated thermal management system occupies arrangement space of other components.

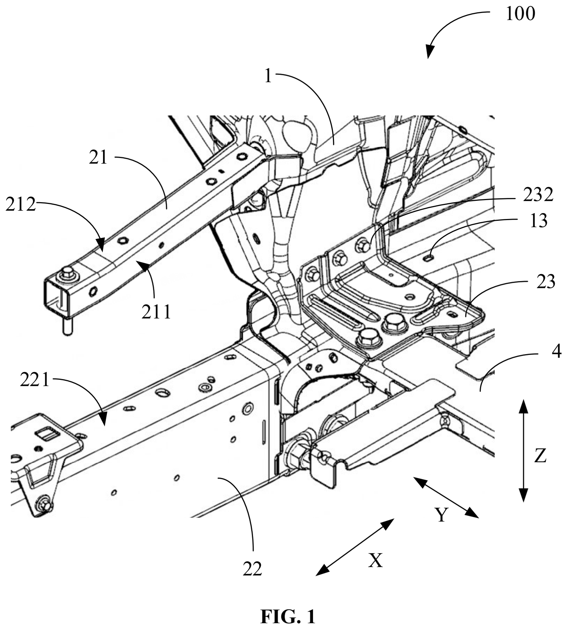

As shown in FIG. 1 to FIG. 3, the present disclosure provides a vehicle 100, including a vehicle body 1, a connection structure 2, and a thermal management system 3. The vehicle body 1 includes a floor panel (not shown), a side panel 11, and a front compartment 12 enclosed by the floor panel and the side panel 11. The connection structure 2 is disposed in the front compartment 12 and connected to the vehicle body 1. The thermal management system 3 is disposed in the front compartment 12 and includes a first thermal management component 31 and a plurality of second thermal management components 32. The first thermal management component 31 is connected to the second thermal management components 32, and a connection manner between the first thermal management component 31 and the second thermal management components 32 may be, for example, direct physical contact, or indirect connection through a component such as a pipeline. The plurality of second thermal management components 32 are integrated into an integrated module 33 of the thermal management system 3. The integrated module 33 is connected to the connection structure 2. The first thermal management component 31 is connected to the vehicle body 1.

In the thermal management system 3 of the present disclosure, the second thermal management components 32 are integrated into the integrated module 33, so that dispersed thermal management components can be centralized to some extent. Therefore, the integrated module 33 can release the space of the front compartment 12 to some extent, allowing for an increase in the volume of other components to improve the performance of the vehicle 100, or enabling the addition of functional components to enrich the functions of the vehicle 100.

Furthermore, since the integrated module 33 has the plurality of second thermal management components 32 integrated therein, the volume and weight of the integrated module 33 increase compared to the first thermal management component 31. By fixing the integrated module 33 to the connection structure 2, the connection of the integrated module 33 has a reduced requirement for the strength and fixing performance of the side panel 11. In addition, compared with a scheme in which the integrated module 33 is directly connected to the side panel 11, a spacing can be formed between the integrated module 33 and the side panel 11 in the present disclosure. When the vehicle 100 experiences a collision, this spacing allows the side panel 11 to deform and absorb the force, thereby avoiding the increase in maintenance costs caused by damage to the integrated module 33. Meanwhile, when the vehicle 100 collides with a pedestrian, this spacing can prevent the pedestrian from directly colliding with the integrated module 33 and suffering physical injury.

In some embodiments, the second thermal management component 32 includes at least one of a heat exchanger, a battery water pump, a motor water pump, an air conditioner water pump, or a three-way valve. The motor water pump and the battery water pump are configured to pump cooling water in a cooling pipeline for a motor and a cooling pipeline for a battery, respectively. The air conditioner water pump is configured to pump a refrigerant in a refrigerant pipeline. The heat exchanger is configured to exchange heat between two pipelines. The three-way valve is configured to enable fluid communication among the three pipelines. The first thermal management component 31 includes at least one of a gas-liquid separator, a radiator, a cooling fan, a compressor, a water tank, a heater, or a condenser.

It should be noted that, in some embodiments, the thermal management system 3 includes, for example, a heat exchanger; however, this heat exchanger may not be integrated into the integrated module 33, and is instead directly connected to the vehicle body 1. In this embodiment, the heat exchanger serves as the first thermal management component 31. Similarly, when, for example, the gas-liquid separator is integrated into the integrated module 33, the gas-liquid separator serves as the second thermal management component 32 of the thermal management system 3.

The connection between the first thermal management component 31 and the vehicle body 1 may indicate that the first thermal management component 31 is connected to the side panel 11 or the floor panel of the vehicle body 1. The connection between the first thermal management component 31 and the floor panel may indicate that the first thermal management component 31 is connected to a component such as a sub-frame or a bracket of the vehicle 100, or is directly connected to the floor panel. The connection between the first thermal management component 31 and the side panel 11 may indicate that the first thermal management component 31 is connected to a side, perpendicular to a length direction X, of the side panel 11, or may indicate that the first thermal management component 31 is connected to a side, perpendicular to a width direction Y, of the side panel 11. It should be noted that since the side panel 11 of the vehicle 100 is generally of a curved or irregular structure, the term 'perpendicular' herein should be understood as that the side panel 11 is substantially perpendicular to the width direction Y or the length direction X. That is, when an included angle between a plane and the width direction Y or the length direction X, or between a tangent line and the width direction Y or the length direction X, falls within the range of 80° to 100°, it should be understood as "perpendicular" as specified in the present disclosure.

The connection between the first thermal management component 31 and the vehicle body 1 may be implemented by welding or snap-fitting. As shown in FIG. 1, in some embodiments, the vehicle body 1 further includes a connection hole 13. The first thermal management component 31 is connected to the vehicle body 1 through the connection hole 13. For example, the first thermal management component 31 and the vehicle body 1 may be connected with each other by providing a bolt in the connection hole 13, which is not limited in the present disclosure. The first thermal management component 31 is detachably connected to the vehicle body 1, which is beneficial to the disassembly and assembly of the vehicle 100 in the later stage, and is also beneficial to the later maintenance and repair of the thermal management system 3.

The connection manner of the integrated module 33 may be specifically described below. The various embodiments of the present disclosure can be supplemented and combined with each other without contradiction. For clarity and brevity of description, reference directions are defined in the present disclosure: the length direction X, the width direction Y, and a height direction Z of the vehicle 100. The length direction X, the width direction Y, and the height direction Z are shown to be perpendicular to each other in the drawings. However, in other embodiments, the length direction X, the width direction Y, and the height direction Z may also form any angle therebetween, which is not limited in the present disclosure.

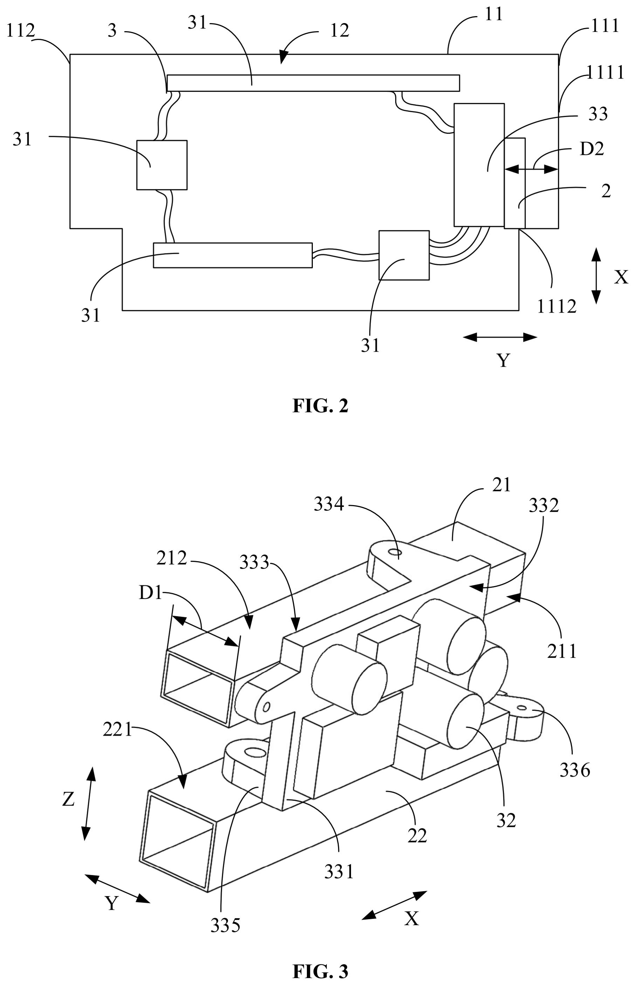

Referring to FIG. 3, in some embodiments, the integrated module 33 includes a plate body 331. The plate body 331 includes an assembly surface 333 and a connection surface 332 opposite to each other in a thickness direction thereof. The second thermal management component 32 is disposed on the connection surface 332. The assembly surface 333 is connected with the connection structure 2. In this embodiment, the second thermal management component 32 is disposed only on one side of the plate body 331. In this way, when the integrated module 33 is connected to the connection structure 2, the connection structure 2 does not require avoidance design to avoid the second thermal management component 32. This arrangement can simplify the design of the connection structure 2, reduce the assembly difficulty when assembling the integrated module 33, and improve the assembly efficiency.

With reference to FIG. 1 and FIG. 2, in some embodiments, the side panel 11 includes a first side 111 and a second side 112 that are spaced apart from each other in the width direction Y of the vehicle 100, and the first side 111 includes a first plate surface 1111 and a second plate surface 1112. The connection structure 2 is connected to the first side 111.

With reference to FIG. 1 and FIG. 3, in an embodiment, the connection structure 2 includes a first connection beam 21 extending in the length direction X. The first connection beam 21 includes a first surface 211 away from the first plate surface 1111 in the width direction Y. The assembly surface 333 is connected to the first surface 211. By connecting the integrated module 33 to the first surface 211, the second thermal management component 32 can be disposed away from the side panel 11. When the side panel 11 is damaged due to collision of the vehicle 100, damage to the second thermal management component 32 away from the side panel 11 can be avoided to some extent.

In addition, as shown in FIG. 2 and FIG. 3, the first surface 211 is connected to the assembly surface 333, and a thickness direction of the plate body 331 is parallel to the width direction Y. As is readily understandable, the plate body 331, being a plate-like component, has the size in the width direction Y significantly smaller than those in the height direction Z and the length direction X. Therefore, this configuration can reduce the space occupied by the integrated module 33 in the width direction Y, thereby releasing the space in the front compartment 12. In addition, the thermal management system 3 is typically disposed in the middle region of the front compartment 12. By arranging the second thermal management component 32 towards the middle region of the front compartment 12, the pipeline connection and fixation of the thermal management system 3 is more convenient and reasonable.

The assembly surface 333 and the first surface 211 may be connected by welding, snap-fitting, or the like. Alternatively, as shown in FIG. 3, the plate body 331 and the first surface 211 may be detachably connected with each other by a bolt or a screw. Compared to welding, the detachable connection facilitates subsequent maintenance and replacement of the integrated module 33. Compared to snap-fitting, the detachable connection using a bolt, a screw, or the like, offers higher connection strength, so that vibration generated during operation of the vehicle 100 can be resisted, and a fault of the vehicle 100 caused by disconnection between the integrated module 33 and the first connection beam 21 is avoided.

As shown in FIG. 3, the assembly surface 333 is connected to the first surface 211. In this case, if there is no supporting structure in the height direction Z, the plate body 331 is prone to fall off due to gravity or vibration during operation of the vehicle 100. Therefore, there is a high requirement for the connection strength between the plate body 331 and the connection structure 2.

Therefore, in some embodiments, the first connection beam 21 includes a second surface 212 away from the floor panel. The plate body 331 includes a first connection portion 334 extending from the assembly surface 333 away from the connection surface 332 (in the width direction Y). The first connection portion 334 is connected to the second surface 212. Through the cooperation of the first connection portion 334 and the first connection beam 21, the first connection beam 21 can support the integrated module 33 in the height direction Z. In addition, the cooperation of the first connection portion 334 and the second surface 212 can also prevent the plate body 331 from rotating parallel to the first surface 211. In this way, the connection stability of the integrated module 33 is effectively improved. When the vehicle 100 experiences bumps or collision, the relative position between the integrated module 33 and the connection structure 2 can also remain unchanged.

Referring to FIG. 2, in some embodiments, a distance D2 between the first surface 211 and the first plate surface 1111 is greater than or equal to 480 mm and less than or equal to 500 mm. For example, the distance D2 may be 480 mm, 485 mm, 490 mm, 495 mm, or 500 mm. By limiting the distance D2 between the first surface 211 and the first plate surface 1111, the first connection beam 21 can be disposed as close to the side panel 11 as possible, thereby further releasing the space in the middle region of the front compartment 12. In this way, the middle region of the front compartment 12 can be used to place more functional components, thereby enriching the functions of the vehicle 100. Alternatively, the middle region of the front compartment 12 can be used to place components such as batteries with larger volumes, thereby further improving the performance of the vehicle 100. However, if the distance D2 between the first surface 211 and the first plate surface 1111 is excessively small, the distance between the first connection beam 21 and the first plate surface 1111 will be too small. In this case, when the side panel 11 of the vehicle 100 is impacted, the first connection beam 21 is more prone to being impacted and deformed. Therefore, the distance D2 can protect the first connection beam 21 to a certain extent, enabling the first connection beam 21 to provide a stable supporting and connecting function.

As shown in FIG. 3, in some embodiments, a size D1 of the first connection beam 21 in the width direction Y of the vehicle 100 is greater than or equal to 30 mm and less than or equal to 40 mm. The size D1 may be 30 mm, 31 mm, 32 mm, 33 mm, 34 mm, 35 mm, 36 mm, 37 mm, 38 mm, 39 mm, or 40 mm. By limiting the size D1, the size of the first connection beam 21 in the width direction Y is controllable. Referring to FIGS. 2 and 3, since the second thermal management component 32 is connected to one side of the plate body 331, the first connection beam 21 and the integrated module 33 occupy a small proportion in the width direction Y by reasonably controlling the size D1. In this way, the integrated module 33 can release the space of the front compartment 12 in the width direction Y to some extent.

When the size D1 of the first connection beam 21 and the distance D2 between the first surface 211 and the first plate surface 1111 fall within the ranges of the foregoing embodiments, the integrated module 33 is disposed as close to the first plate surface 1111 as possible, while reducing the spatial occupation of the integrated module 33 in the width direction Y is reduced. In this way, the space of the front compartment 12 in the width direction Y can be further increased.

Due to the action of gravity, the integrated module 33 continuously applies a force in the height direction Z to the connection structure 2. The force applied by the integrated module 33 to the connection structure 2 in the width direction Y and the length direction X is significantly less than that in the height direction Z.

In order to strengthen the connection stability of the connection structure 2 to the integrated module 33 in the height direction Z, referring to FIG. 3, in some embodiments, the connection structure 2 includes a second connection beam 22 extending along the length direction X of the vehicle 100. The second connection beam 22 is disposed between the first connection beam 21 and the floor panel. The second connection beam 22 includes a third surface 221 facing the first connection beam 21. The plate body 331 includes a second connection portion 335 extending from the assembly surface 333 away from the connection surface 332 (in the width direction Y). The second connection portion 335 is connected to the third surface 221. If the cooperation between the first connection portion 334 the second surface 212 allows the plate body 331 to be regarded as "hanging" on the first connection beam 21, the cooperation between the third surface 221 and the second connection portion 335 may be regarded as that the second connection beam 22 "supports" the integrated module 33 in the height direction Z. With this arrangement, the weight of the integrated module 33 is jointly borne by the first connection beam 21 and the second connection beam 22, so that the connection structure 2 can stably fix the integrated module 33 in place in the height direction Z. In addition, by fixing the plate body 331 at two positions in the height direction Z, the connection structure 2 can prevent the plate body 331 from rotating around an axis parallel to the length direction X at the first connection beam 21. Therefore, this arrangement helps improve the stability of the integrated module 33 during the operation of the vehicle 100.

In the embodiment shown in FIG. 1, the first connection beam 21 and the second connection beam 22 extend from the second plate surface 1112 along the length direction X, that is, the first connection beam 21 and the second connection beam 22 are connected to the second plate surface 1112. Further, the second connection beam 22 may be connected to the floor panel while being connected to the second plate surface 1112. In other embodiments, the connection structure 2 may include the first connection beam 21 extending from the second plate surface 1112 along the length direction X, and the second connection beam 22 connected to the floor panel and extending along the length direction X, which is not limited in the present disclosure.

Furthermore, in some embodiments, a surface of the integrated module 33 facing the floor panel is flush with the third surface 221. In other words, the structure of the integrated module 33 facing the floor panel does not extend beyond the third surface 221 in the height direction Z. The position of the integrated module 33 in the height direction Z is controlled. In this way, arrangement of the flow channels of the thermal management system 3 can have sufficient space, reducing the difficulty of the pipeline arrangement and the pipeline connection. In the embodiment in which the second connection beam 22 extends from the second plate surface 1112 in the length direction X, the second connection beam 22 is spaced apart from the floor panel in the height direction Z, thereby further increasing the space for arrangement of the flow channels of the thermal management system 3.

Referring to FIGS. 1, 3 and 4, in some embodiments, the connection structure 2 includes a fixing plate 23. The fixing plate 23 is connected to the second plate surface 1112. The fixing plate 23 includes a connection unit 231 extending parallel to the floor panel. The plate body 331 includes a third connection portion 336 extending from the connection surface 332 away from the assembly surface 333 (in the width direction Y). The third connection portion 336 is connected to the connection unit 231. In this embodiment, the fixing plate 23 can provide support for the integrated module 33 in the height direction Z, thereby bearing the weight of the integrated module 33 and improving the connection stability of the integrated module 33.

In some embodiments, the connection structure 2 includes merely the first connection beam 21 and the fixing plate 23. The cooperation between the first connection beam 21 and the fixing plate 23 can realize the connection and fixation of the integrated module 33 in the height direction Z, the length direction X and the width direction Y, which is conducive to simplifying the structure and releasing the space of the front compartment 12.

In some other embodiments, the connection structure 2 simultaneously includes the first connection beam 21, the second connection beam 22, and the fixing plate 23. In other words, the integrated module 33 is connected and fixed to the vehicle body 1 through three different connection structures 2. In addition, the first connection beam 21, the second connection beam 22, and the fixing plate 23 can provide multi-directional support in the height direction Z, the length direction X, and the width direction Y, ensuring that loosening at any single position does not lead to connection instability of the integrated module 33 in any direction.

In the embodiment shown in FIG. 3, the position where the plate body 331 is connected to the first surface 211 is located at the upper left corner of the plate body 331 in the drawing. The first connection portion 334 is disposed at the upper right corner. The second connection portion 335 is disposed at the lower left corner. The third connection portion 336 is disposed at the lower right corner. Through "four-corner positioning", the connection structure 2 can enable the center of mass of the integrated module 33 to fall in the middle as much as possible, thereby improving the installation stability of the integrated module 33 on the vehicle 100. In other embodiments, the designer may select the arrangement positions of the first connection portion 334, the second connection portion 335, and the third connection portion 336 according to the position of the center of mass of the integrated module 33 and the mounting space on the first connection beam 21 and the second connection beam 22, which is not limited in the present disclosure.

In an optional embodiment, the integrated module 33 further includes a buffer member (not shown) disposed between the plate body 331 and the connection structure 2. The buffer member may be, for example, a flat member with a thin thickness, and is sandwiched between the assembly surface 333 and the connection structure 2. Alternatively, in the embodiment shown in FIG. 3, taking the first connection portion 334 as an example, the buffer member may be arranged in the hole of the first connection portion 334, so that when the first connection portion 334 and the first connection beam 21 are connected with each other by bolts, the buffer member forms a buffer between the first connection beam 21 and the first connection portion 334. The arrangement of the buffer member can absorb vibration generated during the operation of the vehicle 100, preventing the vibration from being transmitted to the rigid plate body 331 through the rigid fixing structure, which would cause abnormal noise and wear. In addition, disposing the buffer member in the hole can fully utilize the space of the integrated module 33 without increasing the distance between the integrated module 33 and the connection structure 2 in the width direction Y.

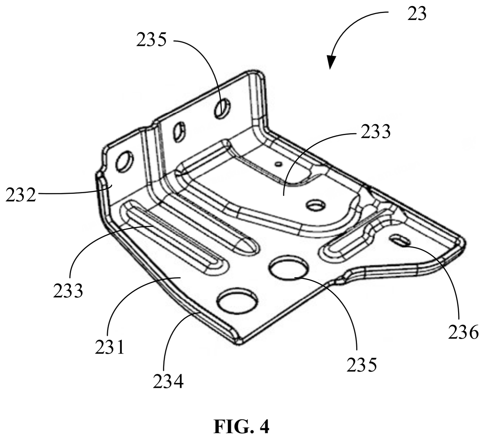

The fixing plate 23 may be welded or snap-fitted to the second plate surface 1112. As shown in FIG. 4, in some embodiments, the fixing plate 23 includes a fixing unit 232 connected to the connection unit 231. The fixing unit 232 is connected to the second plate surface 1112. An extension direction of the fixing unit 232 is different from an extension direction of the connection unit 231. Referring to FIG. 1, by such arrangement, the contact area between the fixing plate 23 and the side panel 11 is effectively increased, and the connection stability between the fixing plate 23 and the side panel 11 is further improved, thereby ensuring the connection stability of the integrated module 33.

In the embodiment shown in FIG. 1 and FIG. 4, the fixing plate 23 includes a plurality of assembly holes 235. The assembly hole 235 may be disposed in the fixing unit 232, so that the fixing plate 23 and the side panel 11 are fixedly connected with each other by using a fastener such as a screw, a bolt, or the like. In order to provide support for the fixing plate 23 in the height direction Z and reduce the strength requirement for the fixing plate 23, as shown in FIG. 4, the assembly hole 235 is further provided in the connection unit 231. As shown in FIG. 1, the connection unit 231 is connected to the bracket 4 of the vehicle 100 through a fastener such as a screw, a bolt, or the like, enabling the bracket 4 to support the fixing plate 23 in the height direction Z. In this way, when the integrated module 33 is connected to the fixing plate 23, the weight of the integrated module 33 can be transmitted to the bracket 4 through the fixing plate 23 and shared by the bracket 4. Therefore, this arrangement can reduce the requirements for the overall structural strength of the fixing plate 23.

In order to improve the overall structural strength of the fixing plate 23 and avoid deformation of the fixing plate 23 after long-term stress, in some embodiments, the fixing plate 23 includes reinforcing ribs 233. The reinforcing ribs 233 are disposed in the fixing unit 232 and the connection unit 231. By providing the reinforcing ribs 233, the deformation resistance of the fixing plate 23 is enhanced, which helps to improve the support strength of the fixing plate 23 for the integrated module 33. In some embodiments, the reinforcing rib 233 may also be disposed only on the fixing unit 232, or only on the connection unit 231, which is not limited in the present disclosure.

As shown in FIG. 4, in an optional embodiment, the fixing plate 23 further includes a flange portion 234 disposed at edges of the connection unit 231 and the fixing unit 232. The arrangement of the flange portion 234 can convert the sharp edges of the fixing plate 23 into smooth edges. In the process of assembling the fixing plate 23, the flange portion 234 can prevent the assembler from being cut. Since there are a large number of cables and pipelines in the front compartment 12, the arrangement of the flange portion 234 can also prevent the sharp edges from cutting the cables and pipelines, thereby protecting the components of the vehicle 100. In some embodiments, the flange portion 234 may also be disposed only on the connection unit 231, or only on the fixing unit 232, which is not limited in the present disclosure.

Because the second thermal management component 32 of the integrated module 33 needs to communicate with a plurality of pipes to implement a thermal management function, in an embodiment, the fixing plate 23 includes a water pipe hole 236. Subsequently, the pipelines may be fixed by, for example, passing structures such as a wire harness and a fixing strap through the water pipe hole 236 to fasten with the pipelines, thereby achieving position fixation of the pipelines. In this way, during the operation of the vehicle 100, the bumpiness and vibration may not cause the displacement of the pipelines, which helps to avoid the disconnection of the pipeline joint and ensure the normal operation of the thermal management system 3.

It should be noted that, in an embodiment in which the vehicle 100 includes the integrated module 33, the integrated module 33 may be connected to the vehicle body 1 by using the connection structure 2 of the foregoing embodiment, and the first thermal management component 31 is directly connected to the vehicle body 1. In an embodiment in which the vehicle 100 does not include the integrated module 33, all the first thermal management components 31 are directly connected to the vehicle body 1, and the connection structure 2 may not be connected to any first thermal management component 31, or some first thermal management components 31 may be adaptively connected to the connection structure 2 for fixation. Therefore, the vehicle 100 of the present disclosure can be actually selectively connected with one of two different thermal management systems 3, that is, the thermal management system 3 including the integrated module 33 and the thermal management system 3 not including the integrated module 33.

The specific embodiments described herein are merely illustrative examples of the spirit of the present disclosure. Those skilled in the art to which the present disclosure pertains may make various modifications, supplements, or substitutions to the described specific embodiments using similar methods, without departing from the spirit of the present disclosure or going beyond the scope defined by the appended claims.

The technical features of the above embodiments may be combined arbitrarily, and in order to make the description concise, not all possible combinations of the technical features in the above embodiments are described. However, as long as there is no contradiction in these combinations of technical features, they should be considered as falling within the scope of the present specification.

## Claims

1. A vehicle, comprising:
a vehicle body comprising a floor panel, a side panel, and a front compartment enclosed by the floor panel and the side panel;
a connection structure disposed in the front compartment and connected to the vehicle body; and
a thermal management system, disposed in the front compartment and comprising a first thermal management component and a plurality of second thermal management components, wherein the first thermal management component is connected to the second thermal management components, the plurality of second thermal management components are integrated into an integrated module of the thermal management system, the integrated module is connected to the connection structure, and the first thermal management component is connected to the vehicle body.

2. The vehicle according to claim 1, wherein the integrated module comprises a plate body; the plate body comprises an assembly surface and a connection surface disposed opposite to each other in a thickness direction of the plate body; the second thermal management components are disposed on the connection surface; and the assembly surface is connected to the connection structure; and
the side panel comprises a first side and a second side spaced apart from each other in a width direction of the vehicle, and the connection structure is connected to the first side.

3. The vehicle according to claim 2, wherein the first side comprises a first plate surface, the connection structure comprises a first connection beam extending in a length direction of the vehicle; the first connection beam comprises a first surface away from the first plate surface in the width direction of the vehicle; the assembly surface is connected to the first surface; and the length direction is different from the width direction.

4. The vehicle according to claim 3, wherein the first connection beam comprises a second surface away from the floor panel; the plate body comprises a first connection portion extending from the assembly surface away from the connection surface; and the first connection portion is connected to the second surface.

5. The vehicle according to claim 3, wherein a size of the first connection beam in the width direction of the vehicle is greater than or equal to 30 mm and less than or equal to 40 mm; and the width direction is different from the length direction; and/or
a distance between the first surface and the first plate surface is greater than or equal to 480 mm and less than or equal to 500 mm.

6. The vehicle according to claim 3, wherein the connection structure comprises a second connection beam extending along the length direction of the vehicle; the second connection beam is disposed between the first connection beam and the floor panel; the second connection beam comprises a third surface facing the first connection beam; the plate body comprises a second connection portion extending from the assembly surface away from the connection surface; and the second connection portion is connected to the third surface.

7. The vehicle according to claim 2, wherein the first side comprises a second plate surface, and the connection structure comprises a fixing plate; the fixing plate is connected to the second plate surface; the fixing plate comprises a connection unit extending parallel to the floor panel; the plate body comprises a third connection portion extending from the connection surface away from the assembly surface; and the third connection portion is connected to the connection unit.

8. The vehicle according to claim 7, wherein the fixing plate comprises a fixing unit connected to the connection unit; the fixing unit is connected to the second plate surface; and an extension direction of the fixing unit is different from an extension direction of the connection unit.

9. The vehicle according to claim 8, wherein the fixing plate comprises a reinforcing rib, and the reinforcing rib is disposed on at least one of the fixing unit or the connection unit; and/or
the fixing plate comprises a flange portion, and the flange portion is disposed at an edge of at least one of the fixing unit or the connection unit.

10. The vehicle according to claim 2, wherein the integrated module further comprises a buffer member disposed between the plate body and the connection structure; and/or
the second thermal management components comprise at least one of a heat exchanger, a battery water pump, a motor water pump, an air conditioner water pump, or a three-way valve; and/or
the first thermal management component comprises at least one of a gas-liquid separator, a radiator, a cooling fan, a compressor, a water tank, a heater, or a condenser.
